# FASCICULE DE BREVET EUROPEEN

(11) **EP 2 150 853 B1**
(45) Date de publication et mention de la délivrance du brevet: **14.03.2012**
(21) Numéro de dépôt: 08760112.6
(22) Date de dépôt: 27.05.2008
(51) Int. Cl.: H04N 5/77, G03B 31/06, G03B 37/04

(54) **PROCEDE DE CREATION ET REPRODUCTION D'UNE IMAGE PANORAMIQUE SONORE, ET APPAREIL DE REPRODUCTION D'UNE TELLE IMAGE**
VERFAHREN ZUR ERZEUGUNG UND WIEDERGABE EINES PANORAMAKLANGBILDES UND VORRICHTUNG ZUR WIEDERGABE EINES DERARTIGEN BILDES
METHOD OF CREATING AND REPRODUCING A PANORAMIC SOUND IMAGE, AND APPARATUS FOR REPRODUCING SUCH AN IMAGE

(30) Priorité: 29.05.2007 FR 0755314
(43) Date de publication de la demande: 10.02.2010
(73) Titulaire: Thomson Licensing, 92130 Issy-les-Moulineaux (FR)
(72) Inventeur: CHEVALLIER, Louis, F-35520 La Meziere (FR); OISEL, Lionel, F-35137 La Nouaye (FR); VIGOUROUX, Jean-Ronan, F-35000 Rennes (FR)
(74) Mandataire: Browaeys, Jean-Philippe
(86) Numéro de dépôt international: PCT/EP2008/056516
(87) Numéro de publication internationale: WO 2008/145661

(56) Documents cités:
- WO-A-2007/038198
- US-A1- 2002 075 295
- US-A1- 2003 193 606
- US-A1- 2006 159 445

## Description

L'invention concerne un procédé de création et de reproduction d'une image panoramique sonore, et un appareil pour la mise en oeuvre du procédé.

De nombreux modèles d'appareils photo numérique sont actuellement sur le marché. L'image est projetée dans l'appareil sur un capteur CCD ou CMOS, convertie en données numériques et stockée dans une mémoire. Grâce à la technologie numérique, l'utilisateur prend une photographie et peut la voir immédiatement après sur un petit écran généralement situé sur la face arrière de l'appareil. L'utilisateur vérifie la qualité de l'image affichée et décide soit de garder la photographie en la mémorisant dans un support amovible, soit de l'effacer.

Certains appareils disposent de capteurs CCD ou CMOS suffisamment rapides pour enregistrer une séquence vidéo. L'utilisateur peut ainsi filmer une scène animée centrée sur des personnages, ou encore enregistrer une animation panoramique en effectuant une rotation sur lui-même. A cause de la puissance limitée pour encoder rapidement les images et de la capacité mémoire de l'appareil photo, les images de la séquence possèdent une résolution plus faible que les images non animées. Ces appareils disposent aussi d'un microphone pour capter l'environnement sonore pendant l'enregistrement de la séquence vidéo. Lors de la reproduction de la séquence vidéo, on peut ainsi entendre le son enregistré en même temps que les images.

Les données numériques de la séquence comprenant une composante vidéo et audio sont incorporées dans un fichier transférable vers un ordinateur ou gravées dans un CD-ROM. Les images de la séquence audiovisuelle peuvent ainsi être reproduites sur un écran et le son est émis vers des haut-parleurs. De cette façon, l'utilisateur peut voir et entendre ce qu'il a filmé avec son appareil photo. Du fait de la résolution faible des images prises au moment de l'enregistrement, la qualité de reproduction n'est pas excellente surtout si les images sont visualisées sur un écran de taille importante ou à l'aide d'un vidéo projecteur.

Le document WO 2007/038198 déposé par la société KODAK et publié le 5 Avril 2007 décrit un appareil photo disposant d'un microphone. Selon un mode de fonctionnement, une séquence sonore est associée à une image, d'une durée de trois secondes. Dans le mode de fonctionnement « « stitched panoramic capture mode » des photographies sont mis bout à bout pour former une photo panoramique. Les séquences audio prises pour chaque image sont reproduites lors de l'affichage des images associées. Si l'image panoramique est affichée complètement, une indication visuelle informe de l'identité de la séquence sonore reproduite.

Le document US 2002/075295 publié le 20 juin 2002 décrit une caméra panoramique disposant de deux microphones, la caméra enregistre les images et le son reçu par les deux microphones et associe un son à une direction.

Le document US 2002/0063709 publié le 30/5/2002 décrit la reproduction d'une image panoramique et un système d'enregistrement de plusieurs pistes audio. Lorsque l'image panoramique est reproduite, le son enregistré sur une piste est constamment reproduit.

Le document US 2003/0193606 publié le 16 octobre 2003 décrit la possibilité d'enregistrer à partir de plusieurs microphones, de manière à avoir un rendu acoustique tridimensionnel. La reproduction s'effectue en fonction de l'angle que l'utilisateur a sélectionné.

D'autres parts, il est connu des logiciels de présentation d'images permettant d'associer un son à une image. Les images défilent sur l'écran automatiquement ou manuellement et à chaque affichage d'une image, le son associé est reproduit. Mais ces images sont sélectionnées manuellement et n'ont pas forcément de liens les unes avec les autres, de ce fait leur reproduction les unes à la suite des autres ne procure pas toujours un bel effet visuel.

Il existe donc un réel besoin pour améliorer la qualité d'une animation graphique composée de plusieurs images tout en reproduisant un contenu sonore adapté à ce qui est actuellement affiché.

L'invention a pour objet un procédé de reproduction d'une image panoramique sonore selon la revendication 1, comportant une étape de définition d'une liste ordonnée d'une pluralité d'images, chaque image étant associée à un contenu sonore ; caractérisé en ce qu'il comporte en outre :
- une étape de filtrage des sons brefs du contenu sonore de chaque image,
- une étape de concaténation des images dans l'ordre défini de façon à créer une image unique dite « panoramique », chaque contenu sonore étant associé à une partie de l'image panoramique contenant l'image associée à ce contenu,
- une étape d'introduction d'une commande d'affichage d'une partie au moins de l'image panoramique ainsi créée, la commande déclenchant également une étape de reproduction continue d'une composante stationnaire d'au moins un contenu sonore associé à au moins une partie affichée de l'image panoramique.

De cette manière, une partie de l'image panoramique ainsi créée peut être affiché et un contenu audio adapté à la partie affichée est reproduit. Lorsque l'utilisateur introduit une commande permettant de modifier la partie de l'image, il n'a plus besoin d'effectuer manuellement l'association avec le contenu sonore. Lors de son affichage, la reproduction de la séquence sonore agrémente la visualisation de l'image. L'étape de reproduction du contenu sonore s'effectue en permanence tant que la partie de l'image panoramique associée à ce contenu est affichée. De cette façon, l'utilisateur peut rester longtemps sur une même partie de l'image, il entend en permanence la séquence sonore associée.

Les sons représentatifs du langage parlé sont filtrés à partir de la fin de la première occurrence. Le filtrage s'effectue en ne gardant que les sons stationnaires, de cette manière les sons brefs seront atténués et dans certains cas favorables, supprimés. De cette façon, l'utilisateur entend la première fois ce qui est dit mais ensuite seul le bruit de fond est reproduit.

Selon un autre perfectionnement, l'étape de concaténation comporte une étape d'élaboration d'une partie de l'image panoramique, cette partie placée entre deux images possède des caractéristiques propres aux deux images situées de part et d'autre de façon à montrer une transition visuelle. De cette façon, le coté gauche de la partie de droite affichée et le coté droit de la partie de gauche affichée sont fusionnés de façon à présenter une transition fluide et agréable à l'utilisateur. Selon un autre perfectionnement, les données de chaque image sont téléchargées dans un autre appareil que celui produisant les images. Cet appareil exécute les étapes de concaténation, d'affichage et de reproduction sonore. De cette façon, on peut reproduire dans n'importe quel appareil de reproduction les images téléchargées.

Selon un autre perfectionnement, si deux parties de l'image panoramique sont affichées alors les deux contenus sonores associés à ces deux parties sont mixés, le niveau sonore d'un contenu dépendant de la proportion affichée de la partie associée. De cette façon, la reproduction entre les deux séquences respecte la répartition entre les deux parties d'images affichées. Selon un autre perfectionnement, les contenus sonores associés à des parties d'image panoramique sont stéréophoniques, l'étape de reproduction consiste à reproduire la voie gauche ou droite du contenu sonore en fonction de la présence à l'affichage de la partie gauche ou droite de la partie d'image panoramique associée. De cette façon, la reproduction entre les deux séquences respecte la position respective à l'écran des deux parties d'images affichées. Selon un autre perfectionnement, les images sont des photographies prises par un appareil photo, l'étape de définition de la liste ordonnée consiste à choisir l'ordre des prises des photographies par ledit appareil photo. De cette façon, l'utilisateur n'a plus besoin de sélectionner individuellement les images et de définir l'ordre de concaténation, l'appareil photo le fait lui-même.

La présente invention a aussi pour objet un appareil de reproductions selon la revendication 8, comportant un moyen de mémorisation des données d'une pluralité d'images et d'une pluralité de contenus sonores associés chacun à une image, un moyen d'introduction de commande permettant de définir une liste ordonnée d'images, un moyen d'affichage et un moyen de reproduction sonore ; caractérisé en ce qu'il comporte un moyen de filtrage des sons brefs du contenu sonore de chaque image, un moyen de concaténation des images dans l'ordre défini pour créer une image unique dite « panoramique », chaque contenu sonore étant associé à une partie de l'image panoramique contenant l'image associée à ce contenu, le moyen d'introduction de commande déclenchant l'affichage d'une partie de l'image panoramique et la reproduction continue d'une composante stationnaire d'au moins un contenu sonore associé à au moins une partie affichée de l'image panoramique.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- les figures 1.a et 1.b représente une vue avant et une vue arrière d'un appareil photo pour la mise en oeuvre d'un exemple de réalisation de l'invention,
- la figure 2 un exemple d'organigramme des principales étapes effectuées pour la mise en oeuvre du procédé objet de l'invention,
- la figure 3 montre un schéma du contenu de la mémoire contenant l'image panoramique créée selon un exemple de réalisation de l'invention,
- la figure 4 montre les corrélations existant entre des images prises indépendamment les unes des autres et l'image panoramique issue de la fusion des images initiales.
- les figures 5a, 5b, 5c illustrent les apparences d'écran et les contenus sonores reproduits lorsque l'utilisateur introduit des commandes de navigation.

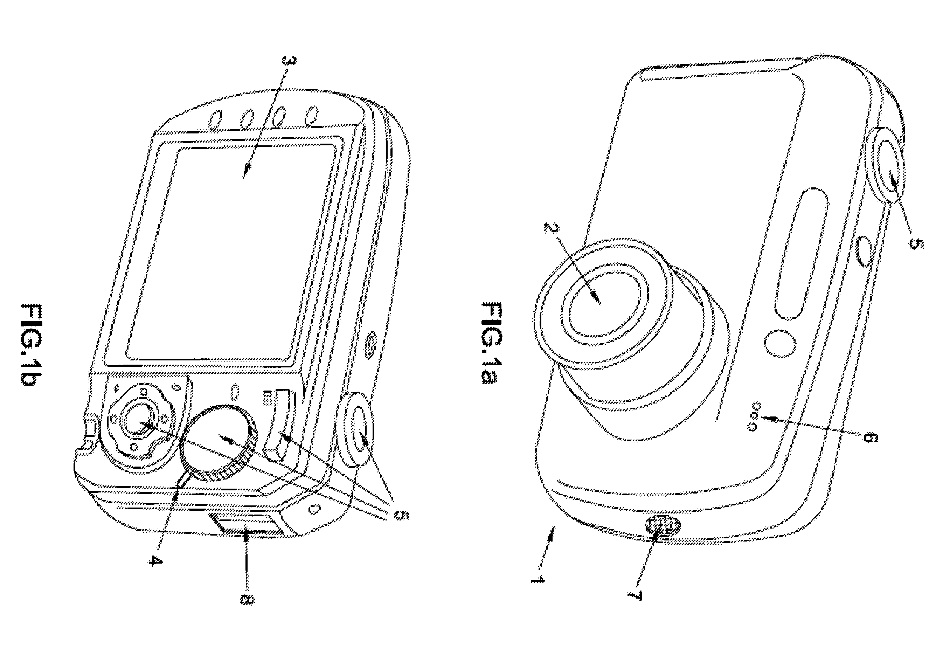

On décrira tout d'abord le fonctionnement d'un appareil photo numérique 1, tel que le montre les figures 1.a et 1.b. Les figures 1.a et 1.b montrent une vue de face et une vue de l'arrière d'un appareil photo selon un exemple de réalisation de l'invention. Nous allons tout d'abord lister les principaux éléments permettant la mise en oeuvre de la présente invention.

Extérieurement, l'appareil photo numérique 1 comporte un objectif 2, un écran 3 de technologie LCD ou OLED, un module mémoire éventuellement amovible 4, et des boutons 5 de réglage et de prise de vue. Les boutons permettent de placer l'appareil 1 soit en mode « prise de vues » où l'écran 3 visualise l'image détectée par les capteurs CCD, soit en mode reproduction de contenus mémorisés où les images enregistrées dans le module mémoire 4 sont affichées sur l'écran 3. De façon générale, l'appareil photographique 1 dispose de boutons de navigation, spécifiant les quatre directions : haut ; bas, gauche, droit. Selon certains modèles, les commandes sont accessibles par des icônes affichées sur l'écran. Une icône est mise en évidence et la fonction associée est exécutée en appuyant sur la touche « OK ». L'appareil photo 1 dispose de nombreux modes de prises de vue dont celui permettant d'enregistrer une image panoramique avec son environnement sonore, appelé « Photo panoramique sonore ». L'enregistrement de l'environnement sonore s'effectue à l'aide d'un microphone 6 disposé sur la face avant de l'appareil photo. Avantageusement, le microphone est de type directionnel, par exemple du genre cardioïde dans l'appareil photo, enregistrant le son dans la direction de la prise de vue. De cette façon, seuls les sons provenant des objets pris en photos sont enregistrés, et plus tard seront restitués. L'appareil 1 dispose également d'un petit haut parleur 7 placé sur le coté. Lorsque l'utilisateur met son appareil en mode reproduction de contenu, et qu'un document vidéo est associé à une séquence sonore, cette dernière est reproduite à l'aide du haut-parleur 7.

L'appareil photo 1 comporte également un connecteur 8 qui permet de transmettre des contenus visuels et sonores vers un ordinateur portable. Typiquement, la communication s'effectue par une liaison USB. Les photos sont enregistrées dans des fichiers qui sont transférés vers l'ordinateur. L'utilisateur peut ainsi voir ses photos sur un grand écran et écouter les contenus sonores par des hauts parleurs reliés à l'ordinateur.

Après avoir détaillé les principaux composants d'un exemple d'appareil pour la mise en oeuvre de l'invention, nous allons expliciter comment ceux-ci coopèrent.

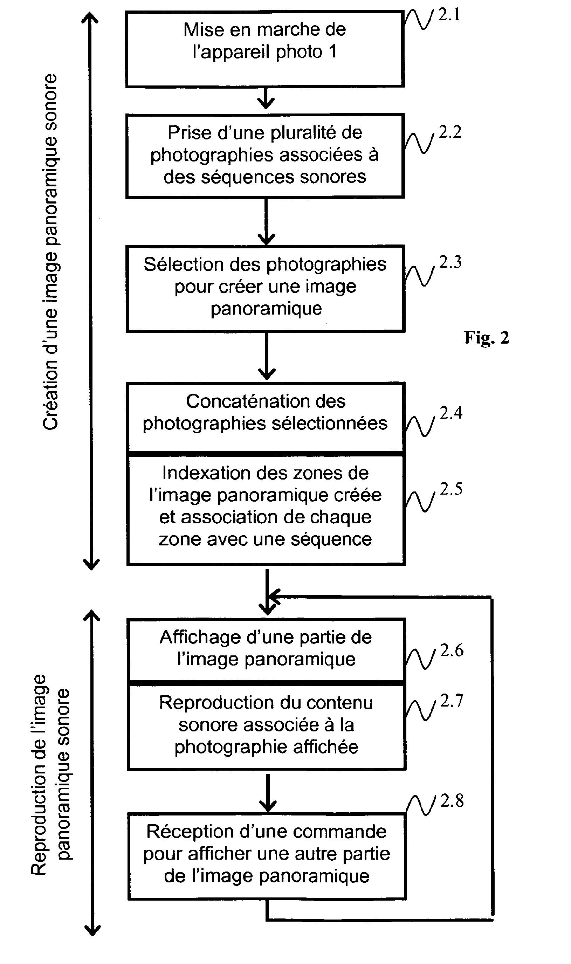

L'organigramme de la figure 2 décrit le déroulement des principales étapes pour la mise en oeuvre du procédé selon un exemple de réalisation de l'invention. Les étapes se décomposent en deux groupes, l'un permet de créer l'image panoramique sonore, et l'autre groupe permet de reproduire une image panoramique sonore. Il va de soi que les étapes de chaque groupe peuvent être exécutées dans des appareils différents.

A l'étape 2.1, l'utilisateur met en marche son appareil photo 1, l'objectif 2 est extrait de son logement et si l'appareil est dans le mode « Photo sonore », l'écran 3 affiche l'image captée par l'objectif 2. Si ce n'est pas déjà fait à la mise en marche, l'utilisateur configure son appareil en sélectionnant par un bouton le mode de fonctionnement « Photo sonore». Dans ce mode de fonctionnement, l'appareil 1 attend le premier appui sur la touche de prise de vue. Lors de la prise de photographie sonore, l'appareil photo 1 enregistre une séquence de son ambiant à l'aide du microphone 6 (étape 2.2). Avantageusement, la durée d'enregistrement de la séquence sonore est paramétrable à l'aide d'un menu d'initialisation. Le son est converti dans un format numérique et constitue un paquet de donnée qui est associé aux données visuelles, le tout constituant un fichier image. L'utilisateur prend ensuite d'autres photos qui constituent autant de fichiers image qui sont mémorisés dans la mémoire 4 de l'appareil photo.

Selon un mode simple de réalisation, à l'étape 2.3, l'utilisateur sélectionne lui-même les fichiers photo permettant de réaliser une image panoramique sonore. Cette sélection peut s'effectuer au niveau de l'appareil photo 1 à l'aide d'un menu de configuration des données, ou au niveau d'un ordinateur dans lequel les fichiers images sont téléchargés. Dans le premier cas, l'utilisateur active l'option « Assemblage d'une image panoramique », apparaît alors toutes les images mémorisées sous la forme d'imagettes (« thumbnails » en Anglais). L'utilisateur sélectionne dans un ordre déterminé, la première image puis la seconde, et ainsi de suite jusqu'à la dernière. Les images sont concaténées les unes à coté des autres pour former l'image panoramique, par exemple le coté gauche d'une première image jouxtant le coté droit de l'image suivante. Une variante pour l'élaboration de l'ordre pour la concaténation des images consiste à implémenter dans l'appareil photo 1 d'un mode spécifique appelé « image panoramique ». Tant que l'appareil photo est dans ce mode, l'ordre de prise des photographies définit l'ordre de la concaténation. Par exemple, l'utilisateur active ce mode, prend une pluralité de photographies en tournant sur lui-même d'un certain angle et termine l'acquisition de la série de photographie en sortant du mode. Toutes les photographies de la série sont ensuite automatiquement utilisées par l'appareil photo pour produire l'image panoramique sonore.

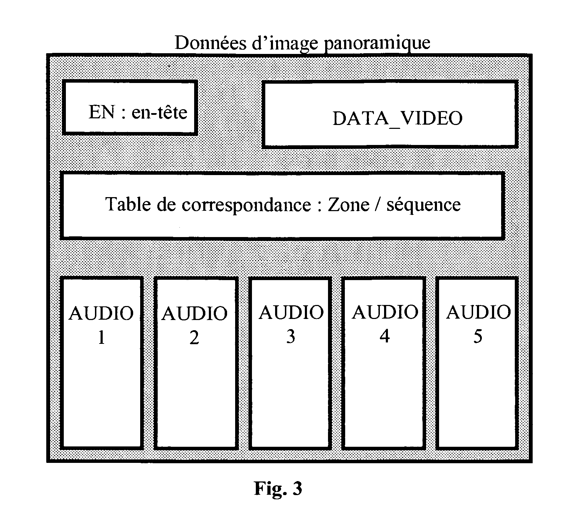

L'étape 2.4 consiste à produire les données de l'image panoramique sonore. Il existe de nombreuses techniques de création de panoramas à partir de plusieurs images. La plupart d'entre elles requièrent l'existence de zones communes entre images à recaler. Considérons deux images à assembler. L'image 1 est prise comme image de référence. La première étape consiste à estimer la déformation à appliquer à la zone commune de l'image 2 afin qu'elle vienne se recaler parfaitement sur l'image 1. Pour ce faire, on peut utiliser une méthode basée sur des points d'intérêts qui consiste en une extraction de points singuliers dans l'image 1 et dans l'image 2, suivi d'une mise en correspondance de ces points entre les deux images. A partir de cet ensemble de points mis en correspondance, il est possible de calculer le modèle de déformation de la zone commune. Ce modèle est alors utilisé pour recaler l'ensemble de l'image 2 sur l'image 1. Ce processus est itéré sur l'ensemble des images afin d'obtenir le panorama final (étape 2.4). A l'étape 2.5, l'image panoramique créée est découpée en parties correspondant à chaque photographie utilisée pour l'assemblage final. Chaque partie est une zone référencée par des coordonnées cartésiennes qui est associée à la séquence sonore produite au moment où la photographie correspondant à cette partie a été prise. Ainsi, chaque zone devient un index permettant de retrouver les images sonores initiales et faire ainsi correspondre telle partie de l'image panoramique avec la séquence sonore correspondante. La figure 3 illustre les différents éléments de l'image panoramique sonore :
- un en-tête EN,
- un bloc de données visuelles constituant l'image panoramique assemblée : DATA_VIDEO
- une table de correspondance associant les paramètres définissant une zone de l'image panoramique à une séquence sonore : TABLE,
- une pluralité de « i » séquences sonores notées « AUDIO_i » associées aux coordonnées « COORD_i » de « i » zones correspondant chacune à une partie de l'image panoramique AUDIO i.

L'image panoramique sonore ainsi créée est ensuite transférée et/ou mémorisée soit dans l'appareil 1, soit dans un ordinateur ou tout autre appareil de reproduction audiovisuel.

A l'étape 2.6, le contenu du fichier est traité afin de reproduire l'image panoramique sonore. Si la reproduction s'effectue par l'appareil photo 1, la partie affichée de l'image panoramique apparaît sur l'écran 3 et la séquence sonore associée à la photographie apparaissant à l'écran est reproduite par le haut-parleur 7 (étape 2.7). La partie droite de l'image panoramique apparaît d'abord sur le moyen d'affichage (écran de télévision ou d'ordinateur, vidéoprojecteur, écran LCD d'un PAD, ...) et le son correspondant à cette partie de l'image est reproduit. La reproduction peut également s'effectuer dans un appareil dans lequel le fichier d'image panoramique sonore a été téléchargé. A l'étape 2.8, l'utilisateur introduit une commande de déplacement de la fenêtre d'affichage pour afficher d'autres parties de l'image panoramique. Si la reproduction s'effectue au niveau de l'appareil 1, les commandes sont introduites en appuyant sur les touches de direction gauche ou droite. A tout moment, la partie affichée est comparée aux zones référencées par les coordonnées COORD_i afin de déterminer la partie qui apparaît le plus ou le plus au centre de la fenêtre d'affichage. Une fois cette zone déterminée, la séquence sonore correspondante est extraite des données d'image panoramique sonore et reproduite. De cette façon, l'image panoramique est restituée avec l'environnement sonore correspondant à l'angle de prise de vue de la partie de l'image actuellement affichée. L'utilisateur navigue ainsi à la fois dans une image et dans un environnement sonore qui change en fonction de ses commandes.

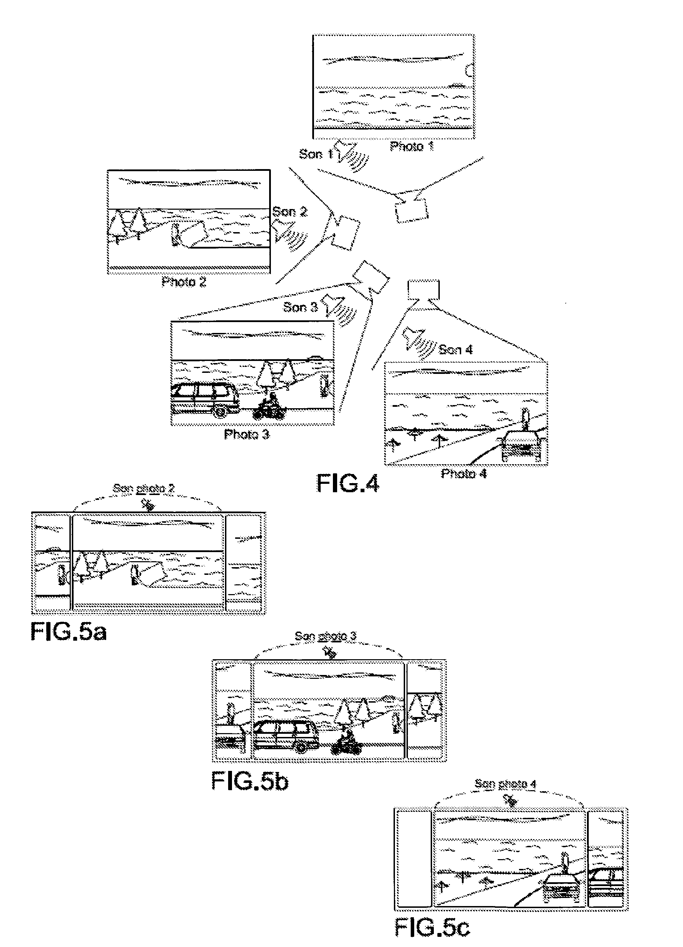

La figure 4 montre la prise de quatre photographies sous des angles différents. Dans l'exemple, l'utilisateur se trouve dans une ville bâtie au bord de l'eau, et a pris les photographies d'un même endroit en effectuant chaque fois une petite rotation sur lui-même. La photographie 1 montre la mer et le son associé est le bruit des vagues. La photographie 2 montre la mer et à gauche un remblai donnant sur un boulevard qui se prolonge au loin, on voit aussi une partie de la plage et on entend les conversations des personnes proches de l'appareil. La photographie 3 montre les voitures sur le boulevard et la séquence sonore enregistre le bruit du trafic et des coups de klaxon. La photographie 4 montre une autre vue du boulevard avec à gauche un peu de plage, la séquence sonore associé contient le bruit du trafic et une conversation. L'image panoramique va réaliser une fusion de ces quatre photographies comme si l'appareil photo était doté d'un très grand angle de prise de vue. Puis, lors de la visualisation de cette image panoramique, la séquence de son sélectionnée pour être reproduite est celle qui est associée à la photographie affichée.

Les figures 5a, 5b et 5c présentent trois apparences d'écran lorsque l'utilisateur introduit des commandes de navigation. La figure 5.a montre la photographie 2 au centre de l'écran et des parties des photographies accolées, la partie gauche de la photographie 1 apparaissant à droite et la partie droite de la photographie 3 apparaissant à gauche. A ce moment, le son reproduit correspond à celui de la photographie 2. Puis l'utilisateur introduit une commande de rotation à gauche et l'apparence d'écran de la figure 5.b est affichée. La photographie 3 apparaît alors avec une partie de la photographie 2 à droite, et une partie de la photographie 4 à gauche. Le son reproduit est alors celui de la photographie 3. Enfin, l'utilisateur introduit une nouvelle commande de rotation à gauche et l'apparence d'écran de la figure 5.c est affichée. La photographie 4 est au centre de l'image affichée et la partie gauche de la photographie 3 apparaît à droite. Une zone blanche apparaît à gauche indiquant ainsi à l'utilisateur qu'il est arrivé à l'extrémité de l'image panoramique. S'il continue à tourner, la zone blanche va remplir tout l'écran par la gauche, puis en continuant la rotation la photographie 1 va peu à peu apparaître par la droite. On peut aussi afficher une fine ligne noire pour matérialiser l'extrémité de l'image panoramique, de cette façon, l'utilisateur peut voir à la fois la première et la dernière photographies de l'image panoramique sur l'écran.

La séquence sonore est reproduite indéfiniment. Selon une première variante, seule la partie stationnaire du son enregistré est reproduit, le procédé extrait alors ses caractéristiques spectrales et synthétise afin de reproduire un son continu. Le fait de reproduire en boucle un son stationnaire évite de percevoir la transition entre la fin de la séquence sonore et son début. Par exemple, si une partie de l'image panoramique correspond à une vue de la mer, l'utilisateur peut entendre continuellement le bruit des vagues. Selon un perfectionnement, l'appareil de reproduction de l'image panoramique sonore dispose d'un moyen de filtrage des séquences parlées. Lors de la première boucle de reproduction, l'ensemble des données sonores est reproduit, puis lors des boucles suivantes et tant que l'utilisateur n'introduit pas de nouvelles commandes, les paroles sont filtrées. Selon ce perfectionnement, la séquence sonore est enregistré et c'est au moment de la reproduction que la partie stationnaire est filtré, plus précisément lors de la seconde reproduction de la séquence sonore. De cette façon, lorsque l'image reste affichée un moment à l'écran, c'est le bruit de fond qui est finalement reproduit (les vagues, le vent, le bruit du trafic, le cri des mouettes, ...). Les paroles qui peuvent être tronquées et très désagréables à entendre de façon répétitive ne sont pas reproduites continuellement.

Selon un perfectionnement, les séquences sonores associées aux photographies sont monophoniques, et un mixage des deux séquences sonores est effectué lorsque les deux photographies associées sont reproduites à l'écran en totalité ou en partie. D'une façon générale, le niveau sonore d'une séquence dépend de la proportion affichée de la photographie correspondante.

Selon un autre perfectionnement, l'enregistrement de la séquence sonore s'effectue en stéréo. Pour cela, l'appareil 1 dispose de deux microphones disposés pour couvrir le coté gauche et le coté droit de l'objet pris par la photo. Si l'appareil de reproduction de l'image panoramique dispose d'un équipement de reproduction sonore, la voie de gauche reproduit les sons de la bande son de gauche, de même pour la voie de droite, lorsque la partie affichée de l'image panoramique correspond à une photographie identifiée. Lorsque l'utilisateur opère une translation de l'image panoramique et que des parties de deux photographies sont affichées, l'appareil va reproduire le son au mieux du cadrage. Dans ce cas, la voie de gauche reproduit les sons de la bande son de droite associée à la photographie affichée à gauche, la voie de droite reproduit les sons de la bande son de gauche associée à la photographie affichée à droite. Avantageusement, un mixage s'opère entre les bandes sons de gauche et de droite associées à deux photographies qui ont une partie visuelle commune.

Selon une variante de fonctionnement, l'utilisateur peut organiser l'assemblage de l'image panoramique au moment de la prise des photographies sonores. Dans ce cas, les photos sonores sont numérotées en fonction de leurs prises et l'image panoramique est créée en assemblant les photos dans l'ordre des prises. L'appareil photo 1 dispose d'un mode spécifique permettant d'associer une série ordonnée de photographies prises les unes après les autres. L'utilisateur termine l'acquisition de la série de photographies constituant l'image panoramique en arrêtant l'appareil photo, ou en changeant de mode. Cette variante supprime l'étape 2.3 d'assemblage manuel des images et permet d'obtenir directement une image panoramique sonore. L'appareil photo peut alors créer l'image panoramique sonore en interne ou transmettre les photographies avec leurs numéros de prise à un appareil extérieur qui est chargé de faire la concaténation pour créer l'image panoramique sonore.

Bien que la présente invention ait été décrite en référence aux modes de réalisation particuliers illustrés, celle-ci n'est nullement limitée par ces modes de réalisation, mais ne l'est que par les revendications annexées. On notera bien que tout moyen de navigation équivalent aux touches de direction est susceptible de s'appliquer pour la mise en oeuvre de l'invention. On notera également que toutes images, pas uniquement d'origine photographique peuvent être utilisées pour créer une image panoramique.

## Revendications

1. Procédé de reproduction d'une image panoramique sonore comportant
- une étape de définition (2.3) d'une liste ordonnée d'une pluralité d'images, chaque image étant associée à un contenu sonore,
- une étape de concaténation (2.4, 2.5) des images dans l'ordre défini de façon à créer une image unique panoramique, chaque contenu sonore étant associé à une partie de l'image panoramique contenant l'image associée à ce contenu,
**caractérisé en ce qu'**il comporte en outre :
une étape d'introduction d'une commande (2.8) d'affichage d'une partie au moins de l'image panoramique ainsi créée, la commande déclenchant également une étape (2.7) de reproduction continue des contenus sonores au moment de l'affichage de la partie d'image associée, le contenu sonore est reproduit intégralement lors de la première occurrence, et lors des occurrences suivantes, une étape de filtrage des sons brefs s'applique au contenu sonore de façon à ne garder que la composante stationnaire.

2. Procédé de reproduction selon la revendication 1 ; caractérisé en ce l'étape de filtrage des sons brefs supprime les sons représentatifs du langage parlé.

3. Procédé de reproduction selon la revendication 1 ou 2; **caractérisé en ce que** l'étape de concaténation (2.4) comporte une étape d'élaboration d'au moins une partie de l'image panoramique placée entre deux images possédant des caractéristiques propre à ces deux images de façon à montrer une transition visuelle.

4. Procédé de reproduction selon l'une quelconque des revendications précédentes ; caractérisé en qu'il comporte une étape de téléchargement des données de chaque image dans un autre appareil que celui produisant les images, cet autre appareil exécutant les étapes de concaténation, d'affichage et de reproduction sonore.

5. Procédé de reproduction selon l'une quelconque des revendications précédentes ; caractérisé en que si deux parties de l'image panoramique sont affichées alors l'étape de reproduction (2.7) comporte le mixage des deux composantes stationnaires des contenus sonores associés à ces deux parties pour produire un son monophonique, le niveau sonore de chacune des composantes stationnaires dépendant de la proportion affichée de la partie associée.

6. Procédé de reproduction selon l'une quelconque des revendications 1 à 4 ; caractérisé en que les contenus sonores associées à des parties d'image panoramique sont stéréophoniques, l'étape de reproduction continue (2.7) sélectionnant la composante stationnaire de la voie gauche ou la.voie droite du contenu sonore en fonction de la présence à l'affichage de la partie gauche ou droite de la partie d'image panoramique associée.

7. Procédé de reproduction selon l'une quelconque des revendications 1 à 4 ; caractérisé en que les contenus sonores associées à des parties d'image panoramique sont stéréophoniques, si des parties de deux images sont affichées alors la composante stationnaire de la voie gauche de l'image de droite est reproduite sur la voie de droite, et la composante stationnaire de la voie droite de l'image de gauche est reproduite sur la voie de gauche.

8. Appareil de reproduction (1) comportant un moyen de mémorisation des données d'une pluralité d'images et d'une pluralité de contenus sonores associés chacun à une image, un moyen d'introduction de commande (4) permettant de définir une liste ordonnée d'images, un moyen d'affichage (3) et un moyen de reproduction sonore (7), un moyen de concaténation des images dans l'ordre défini pour créer une image unique panoramique, chaque contenu sonore étant associé à une partie de l'image panoramique contenant l'image associée à ce contenu, **caractérisé en ce que** le moyen d'introduction de commande (4) déclenchent l'affichage d'une partie de l'image panoramique et la reproduction continue des contenus sonores au moment de l'affichage de la partie d'image associée ; le contenu sonore étant reproduit intégralement lors de la première occurrence, et lors des occurrences suivantes, un moyen de filtrage supprime les sons brefs du contenu sonore de façon à ne garder que la composante stationnaire.

9. Appareil de reproduction (1) selon la revendication 8 ; caractérisé en ce le moyen de filtrage des sons brefs supprime les sons représentatifs du langage parlé.

10. Appareil de reproduction (1) selon la revendication 8 ou 9; **caractérisé en ce que** l'étape de concaténation (2.4) comporte une étape d'élaboration d'au moins une partie de l'image panoramique placée entre deux images possédant des caractéristiques propre à ces deux images de façon à montrer une transition visuelle.

11. Appareil de reproduction (1) selon l'une quelconque des revendications 8 à 10 ; caractérisé en que si deux parties de l'image panoramique sont affichées alors le moyen de reproduction (7) mixe des deux composantes stationnaires des contenus sonores associés à ces deux parties et produit un son monophonique, le niveau sonore de chacune des composantes stationnaires dépendant de la proportion affichée de la partie associée.

12. Appareil de reproduction (1) selon l'une quelconque des revendications 8 à 10; caractérisé en que les contenus sonores associées à des parties d'image panoramique sont stéréophoniques, le moyen de reproduction (7) sélectionnant la composante stationnaire de la voie gauche ou la voie droite du contenu sonore en fonction de la présence à l'affichage de la partie gauche ou droite de la partie d'image panoramique associée.

13. Appareil de reproduction (1) selon l'une quelconque des revendications 8 à 10 ; caractérisé en que les contenus sonores associées à des parties d'image panoramique sont stéréophoniques, si des parties de deux images sont affichées alors la composante stationnaire de la voie gauche de l'image de droite est reproduite sur la voie de droite, et la composante stationnaire de la voie droite de l'image de gauche est reproduite sur la voie de gauche

## Claims

1. Method for reproduction of a panoramic sound image comprising:
- a step of definition (2.3) of an ordered list of a plurality of images, each image being associated with a sound content,
- a step of concatenation of images (2.4, 2.5) in the order defined so as to create a unique image, each sound content being associated with a part of the panoramic image containing the image associated with this content, **characterized in that** it further comprises:
a step of introduction of a command (2.8) displaying a part at least of a panoramic image thus created, the command also triggering a step (2.7) of continuous reproduction of the sound contents during the display of the associated image part, the sound content being reproduced entirely at the first occurrence, and during the next occurrences, a filtering step of the short sounds is applied to the sound content so as to conserve only the stationary component.

2. Method for reproduction according to claim 1, **characterized in that** the step of filtering the short sounds removes the sounds representative of spoken language.

3. Method for reproduction according to claim 1 or 2, **characterized in that** the step of concatenation (2.4) comprises a step of elaboration of at least a part of the panoramic image placed between two images having characteristics specific to these two images so as to show a visual transition.

4. Method for reproduction according to any one of the preceding claims, **characterized in that** it comprises a step of downloading of data of each image into a device other than that producing the images, this other device executing the steps of concatenation, display and sound reproduction.

5. Method for reproduction according to any one of the preceding claims, **characterized in that** if two parts of the panoramic image are displayed then the step of reproduction (2.7) comprises the mixing of two stationary components of sound contents associated with these two parts to produce a monophonic sound, the sound level of each of the stationary components depending on the displayed proportion of the associated part.

6. Method for reproduction according to any one of claims 1 to 4, **characterized in that** the sound contents associated with the parts of the panoramic image are stereophonic, the step of reproduction continues (2.7) selecting the stationary component of the left or right soundtrack of the sound content according to the presence on the display of the left or right part of the part of the associated panoramic image.

7. Method for reproduction according to any one of claims 1 to 4, **characterized in that** the sound contents associated with the parts of the panoramic image are stereophonic, if parts of two images are displayed then the stationary component of the left soundtrack of the right image is reproduced on the right soundtrack, and the stationary component of the right soundtrack of the left image is reproduced on the left soundtrack.

8. A reproduction device (1) comprising a means for memorization of data of a plurality of images and a plurality of sound contents each associated with an image, a means of introduction of command (4) enabling defining of an ordered list of images, a display means (3) and a means of sound reproduction (7), a means of concatenation of images in a defined order to create a unique panoramic image, each sound content being associated with a part of the panoramic image containing the image associated with this content, **characterized in that** the means of introduction of a command (4) triggers the display of a part of the panoramic image and the continuous reproduction of sound contents during the display of the associated image part; the sound content being reproduced entirely at the first occurrence, and during the next occurrences, a means of filtering removes the short sounds of the sound content a stationary component of at least a sound content so as to only conserve the stationary component.

9. A reproduction device (1) according to claim 8, **characterized in that** the means of filtering of the short sounds removes the sounds representative of spoken language.

10. A reproduction device (1) according to claim 8 or 9, **characterized in that** the step of concatenation (2.4) comprises a step of elaboration of at least a part of the panoramic image placed between two images having characteristics specific to these two images so as to show a visual transition.

11. A reproduction device (1) according to any one of claims 8 to 10, **characterized in that** if two parts of the panoramic image are displayed then the means of reproduction (7) mixes of two stationary components of sound contents associated with these two parts and produces a monophonic sound, the sound level of each of the stationary components depending on the displayed proportion of the associated part.

12. A reproduction device (1) according to any one of claims 8 to 10, **characterized in that** the sound contents associated with the parts of the panoramic image are stereophonic, the means of reproduction (7) selecting the stationary component of the left or right soundtrack of the sound content according to the presence on the display of the left or right part of the part of the associated panoramic image.

13. A reproduction device (1) according to any one of claims 8 to 10, **characterized in that** the sound contents associated with the parts of the panoramic image are stereophonic, if parts of two images are displayed then the stationary component of the left soundtrack of the right image is reproduced on the right soundtrack, and the stationary component of the right soundtrack of the left image is reproduced on the left soundtrack.

## Patentansprüche

1. Verfahren zur Wiedergabe eines Panoramaklangbildes mit:
- einem Schritt der Festlegung (2.3) einer geordneten Liste einer Vielzahl von Bildern, wobei jedes Bild einem Klanginhalt zugeordnet ist,
- einem Schritt der Verkettung (2.4, 2.5) der Bilder in der festgelegten Reihenfolge derart, dass ein einziges Panoramabild erzeugt wird, wobei jeder Klanginhalt einem Teil des Panoramabildes zugeordnet wird, der das diesem Inhalt zugeordnete Bild enthält,
**dadurch gekennzeichnet, dass** es ferner folgende Schritte umfasst:
einen Schritt der Eingabe eines Befehls (2.8) zum Anzeigen mindestens eines Teils des derart erzeugten Panoramabildes, wobei der Befehl ebenfalls einen Schritt (2.7) der kontinuierlichen Wiedergabe der Klanginhalte zu dem Zeitpunkt der Anzeige des zugeordneten Bildteils auslöst, der Klanginhalt beim ersten Vorkommen vollständig wiedergegeben wird und bei den nachfolgenden Vorkommen ein Schritt der Filterung der kurzen Töne auf den Klanginhalt angewendet wird, so dass nur die stationäre Komponente übrig bleibt.

2. wiedergabeverfahren nach Anspruch 1, **dadurch gekennzeichnet, dass** der Schritt der Filterung der kurzen Töne die für die gesprochene Sprache repräsentativen Töne ausfiltert.

3. Wiedergabeverfahren nach Anspruch 1 oder 2, **dadurch gekennzeichnet, dass** der Schritt der Verkettung (2.4) einen Schritt der Entwicklung mindestens eines zwischen zwei Bildern befindlichen und diesen zwei Bildern eigene Eigenschaften aufweisenden Teils des Panoramabildes umfasst, so dass ein optischer Übergang gezeigt wird.

4. Wiedergabeverfahren nach einem beliebigen der vorhergehenden Ansprüche, **dadurch gekennzeichnet, dass** es einen Schritt des Herunterladens der Daten des jeweiligen Bildes in einem anderen Gerät als demjenigen, in dem die Bilder erzeugt werden, umfasst, wobei dieses andere Gerät die Schritte der Verkettung, des Anzeigens und der Klangwiedergabe durchführt.

5. Wiedergabeverfahren nach einem beliebigen der vorhergehenden Ansprüche, **dadurch gekennzeichnet, dass**, wenn zwei Teile des Panoramabildes angezeigt werden, der Schritt der Wiedergabe (2.7) das Mixen der zwei stationären Komponenten der diesen zwei Teilen zugeordneten Klanginhalte umfasst, um einen monophonen Ton zu erzeugen, wobei der Klangpegel der jeweiligen stationären Komponente von dem angezeigten Anteil des zugeordneten Teils abhängt.

6. Wiedergabeverfahren nach einem beliebigen der Ansprüche 1 bis 4, **dadurch gekennzeichnet, dass** die Panoramabildteilen zugeordneten Klanginhalte stereophon sind, wobei der Schritt der kontinuierlichen Wiedergabe (2.7) die stationäre Komponente der linken Spur oder der rechten Spur des Klanginhalts auswählt in Abhängigkeit davon, ob bei der Anzeige der linke oder der rechte Teil des zugeordneten Panoramabildteils vorhanden ist.

7. Wiedergabeverfahren nach einem beliebigen der Ansprüche 1 bis 4, **dadurch gekennzeichnet, dass** die Panoramabildteilen zugeordneten Klanginhalte stereophon sind und dass, wenn Teile zweier Bilder angezeigt werden, die stationäre Komponente der linken Spur des rechten Bildes auf der rechten Spur wiedergegeben wird und die stationäre Komponente der rechten Spur des linken Bildes auf der linken Spur wiedergegeben wird.

8. Wiedergabegerät (1) mit einem Mittel zum Speichern der Daten einer Vielzahl von Bildern und einer Vielzahl von jeweils einem Bild zugeordneten Klanginhalten, einem Mittel zur Befehlseingabe (4), mit dem eine geordnete Liste von Bildern festgelegt werden kann, einem Anzeigemittel (3) und einem Mittel für die Klangwiedergabe (7), einem Mittel zum Verketten der Bilder in der festgelegten Reihenfolge, um ein einziges Panoramabild zu erzeugen, wobei jeder Klanginhalt einem Teil des Panoramabildes zugeordnet wird, der das diesem Inhalt zugeordnete Bild enthält, **dadurch gekennzeichnet, dass** das Mittel zur Befehlseingabe (4) das Anzeigen eines Teils des Panoramabildes und die kontinuierliche Wiedergabe der Klanginhalte zu dem Zeitpunkt der Anzeige des zugeordneten Bildteils auslöst, wobei der Klanginhalt beim ersten Vorkommen vollständig wiedergegeben wird und bei den nachfolgenden Vorkommen ein Filterungsmittel die kurzen Töne des Klanginhalts derart herausfiltert, dass nur die stationäre Komponente übrig bleibt.

9. Wiedergabegerät (1) nach Anspruch 9, **dadurch gekennzeichnet, dass** das Mittel zur Filterung der kurzen Töne die für die gesprochene Sprache repräsentativen Töne ausfiltert.

10. Wiedergabegerät (1) nach Anspruch 8 oder 9, **dadurch gekennzeichnet, dass** der Schritt der Verkettung (2.4) einen Schritt der Entwicklung mindestens eines zwischen zwei Bildern befindlichen und diesen zwei Bildern eigene Eigenschaften aufweisenden Teils des Panoramabildes umfasst, so dass ein optischer Übergang gezeigt wird.

11. Wiedergabegerät (1) nach einem beliebigen der Ansprüche 8 bis 10, **dadurch gekennzeichnet, dass**, wenn zwei Teile des Panoramabildes angezeigt werden, das Wiedergabemittel (7) die zwei stationären Komponenten der diesen zwei Teilen zugeordneten Klanginhalte mixt und einen monophonen Ton erzeugt, wobei der Klangpegel der jeweiligen stationären Komponente von dem angezeigten Anteil des zugeordneten Teils abhängt.

12. Wiedergabegerät (1) nach einem beliebigen der Ansprüche 8 bis 10, **dadurch gekennzeichnet, dass** die Panoramabildteilen zugeordneten Klanginhalte stereophon sind, wobei das Wiedergabemittel (7) die stationäre Komponente der linken Spur oder der rechten Spur des Klanginhalts auswählt in Abhängigkeit davon, ob bei der Anzeige der linke oder der rechte Teil des zugeordneten Panoramabildteils vorhanden ist.

13. Wiedergabegerät (1) nach einem beliebigen der Ansprüche 8 bis 10, **dadurch gekennzeichnet, dass** die Panoramabildteilen zugeordneten Klanginhalte stereophon sind und dass, wenn Teile zweier Bilder angezeigt werden,
die stationäre Komponente der linken Spur des rechten Bildes auf der rechten Spur wiedergegeben wird und die stationäre Komponente der rechten Spur des linken Bildes auf der linken Spur wiedergegeben wird.
